# FASCICULE DE BREVET EUROPEEN

(11) **EP 3 340 407 B1**
(45) Date de publication et mention de la délivrance du brevet: **19.08.2020**
(21) Numéro de dépôt: 17207343.9
(22) Date de dépôt: 14.12.2017
(51) Int. Cl.: H02G 3/04

(54) **COLONNE POUR LE SUPPORT D'AU MOINS UN APPAREILLAGE ÉLECTRIQUE ET/OU LE CHEMINEMENT DE CÂBLES**
SÄULE ALS HALTERUNG FÜR MINDESTENS EIN ELEKTROGERÄT UND/ODER DEN KABELKANAL
COLUMN FOR SUPPORTING AT LEAST ONE ELECTRICAL APPLIANCE AND/OR ROUTING OF CABLES

(30) Priorité: 20.12.2016 FR 1662925
(43) Date de publication de la demande: 27.06.2018
(73) Titulaire: Legrand France, 87000 Limoges (FR); Legrand SNC, 87000 Limoges (FR)
(72) Inventeur: JARRY, Patrice, 72140 MONT SAINT JEAN (FR)
(74) Mandataire: Jacobacci Coralis Harle

(56) Documents cités:
- EP-A2- 0 828 326
- WO-A1-2006/034513
- DE-A1-102008 001 461
- FR-A1- 2 824 430

## Description

La présente invention concerne une colonne pour le support d'au moins un appareillage électrique et/ou le cheminement de câbles ou de conducteurs de transport d'énergie conforme au préambule de la revendication 1.

L'invention trouve une application particulièrement avantageuse pour la réalisation d'une colonne verticale à fixer entre le sol et le plafond d'une pièce.

### ARRIERE-PLAN TECHNOLOGIQUE

De telles colonnes sont placées dans des pièces de grande surface, telles que des bureaux paysagers, et sont maintenues verticalement entre le plancher et le plafond. Elles peuvent également se présenter sous la forme de potelets dont la hauteur est telle que leur sommet arrive au niveau d'un plateau de bureau.

Ces colonnes permettent de supporter des appareillages électriques comme des prises de courant, des interrupteurs, des porte-fusibles, des sectionneurs, des disjoncteurs, ou des appareillages informatiques tels que des prises informatiques, ou encore des appareillages téléphoniques tels que des prises de téléphone.

Elles permettent également le cheminement des câbles ou des fils conducteurs auxquels lesdits appareillages sont connectés. Ces câbles ou fils conducteurs proviennent du sol ou du plafond et sont reçus à l'intérieur de ces colonnes dans des conduits de cheminement de câbles ou fils conducteurs.

On connaît déjà notamment des documents EP227434, EP0828326, DE10120526, FR2811815, EP1335462 et ES1063422, des colonnes de ce type dans lesquelles la mise en appui est réalisée grâce à un ressort de compression mis en œuvre grâce au vissage/dévissage d'éléments filetés de la colonne.

Ces solutions sont relativement longues et fastidieuses à mettre en œuvre en raison du vissage/dévissage nécessaire.

On connaît en outre des documents FR2772106, EP1816717 et EP2262070 des colonnes dans lesquelles la mise en appui est réalisée grâce à un ressort de compression actionné par un levier, avec éventuellement un système de came ou d'engrenages.

Ces solutions présentent l'inconvénient d'être techniquement complexes.

Enfin, on connaît du document FR2757694 une colonne dans laquelle la mise en appui est réalisée sans ressort de compression, grâce à l'actionnement d'un levier dont une partie forme une surface de came qui coopère avec la perche pour la repousser et l'écarter de l'ossature de la colonne. Cette solution requiert néanmoins la mise en œuvre d'une gâchette de blocage pour fixer la perche avant actionnement du levier et est donc particulièrement complexe.

### OBJET DE L'INVENTION

Afin de remédier aux différents inconvénients de l'état de la technique, l'invention propose une nouvelle colonne comprenant un dispositif de mise en appui simple à fabriquer et à mettre en œuvre par l'utilisateur.

Plus particulièrement, l'invention concerne une colonne conforme à la revendication 1.

D'autres caractéristiques non limitatives et avantageuses de la colonne conforme à l'invention, prises individuellement ou selon toutes les combinaisons techniquement possibles, sont énoncées dans les revendications 2 à 10.

### DESCRIPTION DETAILLEE D'UN EXEMPLE DE REALISATION

La description qui va suivre en regard des dessins annexés, donnés à titre d'exemples non limitatifs, fera bien comprendre en quoi consiste l'invention et comment elle peut être réalisée.

Sur les dessins annexés :
- la figure 1 est une vue schématique en perspective de la colonne selon l'invention dans laquelle la bague de verrouillage est dans une première position angulaire de déverrouillage,
- la figure 2 est une vue schématique en perspective de la colonne selon l'invention dans laquelle la bague de verrouillage est dans une deuxième position angulaire de verrouillage,
- la figure 3 est une vue schématique partielle en perspective similaire aux figures 1 et 2, dans laquelle les éléments du dispositif de mise en appui sont éclatés,
- la figure 4 est une vue schématique agrandie du détail D1 de la figure 3,
- la figure 5 est une vue schématique agrandie du détail D2 de la figure 3,
- la figure 6 est une vue schématique en perspective de dessus du deuxième anneau du dispositif de mise en appui de la figure 5,
- la figure 7 est une vue schématique en perspective de dessous du deuxième anneau du dispositif de mise en appui de la figure 5,
- la figure 8 est une vue schématique en perspective de dessus du premier anneau du dispositif de mise en appui,
- la figure 9 est une vue schématique en perspective de dessous du premier anneau du dispositif de mise en appui,
- la figure 10 est une vue schématique de dessus du deuxième anneau de la figure 6,
- la figure 11 est une vue schématique de dessous du deuxième anneau de la figure 6,
- la figure 12 est une vue schématique de profil du deuxième anneau de la figure 6,
- la figure 13 est une vue schématique en coupe selon le plan A-A de la figure 11,
- la figure 14 est une vue schématique en coupe selon le plan B-B de la figure 13,
- la figure 15 est une vue schématique de dessous du premier anneau de la figure 8,
- la figure 16 est une vue schématique de dessus du premier anneau de la figure 8,
- la figure 17 est une vue schématique de profil du premier anneau de la figure 8,
- la figure 18 est une vue schématique en coupe selon le plan A'-A' de la figure 16,
- la figure 19 est une vue schématique en coupe selon le plan B'-B' de la figure 18,
- la figure 20 est une vue schématique en perspective d'un élément de fixation du deuxième anneau du dispositif de mise en appui,
- la figure 21 est une vue schématique de dessus de l'élément de fixation du deuxième anneau de la figure 20,
- la figure 22 est une vue schématique en coupe selon le plan C-C de la figure 21,
- la figure 23 est une vue schématique en perspective de la bague de verrouillage du dispositif de mise en appui,
- la figure 24 est une vue schématique de dessus de la bague de verrouillage de la figure 23,
- la figure 25 est une vue en coupe selon le plan D-D de la figure 24, et
- la figure 26 est une vue en coupe selon le plan E-E de la figure 25.

Dans la suite, le côté avant des pièces décrites correspondra à celui orienté vers le plafond et le côté arrière correspondra à celui orienté vers le sol.

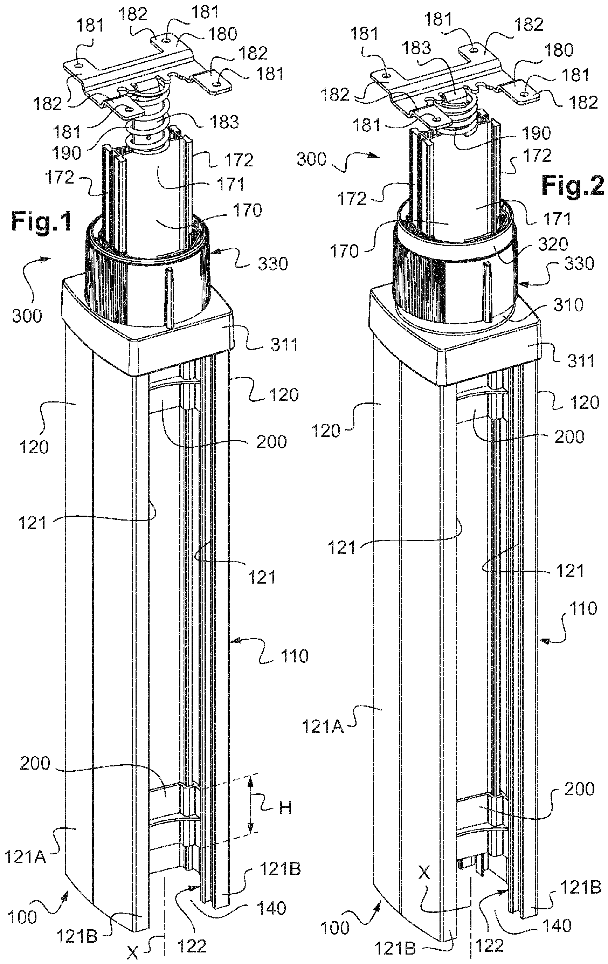

On a représenté partiellement, sur les figures 1 et 2, une colonne 100 conforme à l'invention pour le support d'appareillages électriques (non représentés) et le cheminement de câble ou de conducteurs nécessaires à la desserte desdits appareillages.

Bien entendu, cette colonne 100 peut supporter toute sorte d'appareillages électriques, notamment des appareillages alimentés par du courant fort comme des prises de courant et des interrupteurs, mais aussi des appareillages alimentés par du courant faible, comme des appareillages informatiques et téléphoniques.

Cette colonne 100 est destinée à être mise en appui entre deux parois. Elle comporte à cet effet un dispositif de mise en appui entre deux parois.

Il s'agit notamment d'une colonne verticale, destinée à être mise en appui entre le sol et le plafond d'une pièce.

Elle peut également par exemple être mise en appui entre le sol et une paroi horizontale telle que la plaque horizontale d'un bureau.

La colonne 100 comprend une ossature 110 allongée selon un axe longitudinal X. Cette ossature 110 présente ici une forme globalement parallélépipédique, de base sensiblement carrée, avec quatre faces principales opposées parallèles deux à deux.

Elle est réalisée avantageusement en matière métallique telle que de l'aluminium.

Le dispositif de mise en appui 300 de cette ossature 110 comprend notamment une perche 170 télescopique partiellement logée dans ladite ossature 110 et dont une partie s'étend dans le prolongement de ladite ossature 110.

Plus précisément, la perche 170 comprend une partie inférieure logée à coulissement dans l'ossature 110 et une partie supérieure qui fait saillie hors de l'ossature 110 à travers une extrémité de l'ossature 110 (voir figures 1 à 3).

Ici, la perche 170 fait saillie à travers l'extrémité avant de l'ossature 110, destinée à être orientée en direction du plafond.

L'ossature 110 comprend au moins deux joues 120 (figures 1, 2 et 3) de forme allongée selon l'axe longitudinal X, comportant, le long de leurs bords libres 121 longitudinaux, des moyens de montage adaptés à recevoir directement ou indirectement au moins un appareillage électrique logé entre lesdites joues.

En effet, lesdits moyens de montage peuvent être adaptés à recevoir directement des moyens de montage complémentaires prévus sur le socle de chaque appareillage ou des moyens de montage d'un support destiné au montage de tels appareillages.

Ici, l'ossature 110 comprend en outre au moins deux éléments d'entretoise 200 distincts reliant les joues 120 entre elles, les deux éléments d'entretoise 200 étant espacés l'un de l'autre, le long dudit axe longitudinal, d'une distance supérieure ou égale à la hauteur de l'un des éléments d'entretoise 200.

Les éléments d'entretoise 200 maintiennent les deux joues 120 ensemble, écartées entre elles d'une même distance égale à la largeur de l'élément d'entretoise 200 (figures 1 et 2).

Les éléments d'entretoise 200 sont formées de pièces individuelles distinctes et séparées, disposées à distance les unes des autres, comme mentionné précédemment.

Ces pièces sont réalisées par moulage d'une matière plastique rigide ou métallique.

Les deux joues 120 délimitent, avec lesdits éléments d'entretoise 200, au moins un conduit pour le logement du ou des appareillages électriques ainsi que le logement des câbles ou conducteurs nécessaires à la desserte de chaque appareillage.

En pratique, de préférence, chaque conduit est adapté à accueillir une pluralité d'appareillages électrique.

Ici, les joues 120 forment deux faces principales opposées de l'ossature 110 et délimitent deux conduits qui s'ouvrent chacune sur l'une des deux autres faces principales opposées de l'ossature 110.

Les joues 120 forment ainsi les ailes latérales délimitant chaque conduit, tandis que les éléments d'entretoise 200 forment un fond de ces conduits.

Les deux conduits sont ainsi ici disposés dos à dos. Ils s'ouvrent chacun par une ouverture longitudinale 140 s'étendant selon l'axe longitudinal X de la colonne 100. Chaque ouverture longitudinale 140 est délimitée par deux bords libres 121 en vis-à-vis des deux joues 120 (voir figures 1 à 3).

Chacune des ouvertures longitudinales 140 desdits conduits est destinée à être fermée par des tronçons de couvercle (ici, non représentés) qui s'étendent entre les façades des appareillages électriques rapportés dans les conduits.

Plus précisément, ici, lesdits éléments d'entretoise 200 forment un fond discontinu pour les conduits.

Ainsi, sur une grande partie de leur longueur, les deux conduits communiquent entre eux.

L'absence de fond sur une grande partie de la longueur du conduit, le long de l'axe longitudinal X de la colonne 100, permet de libérer de l'espace à l'intérieur de la colonne 100, pour un même volume externe global de la colonne.

Ainsi, la colonne 100 présente une plus grande capacité d'accueil des appareillages électriques et des câbles électriques que les colonnes classiques déjà connues.

Comme le montrent les figures 1 et 2, dans l'exemple de réalisation représenté sur les figures, les deux éléments d'entretoise 200 de l'ossature 110 de la colonne 100 sont ici chacun disposés à proximité de l'une des extrémités longitudinales de l'ossature 110.

L'un des deux éléments d'entretoise 200 est disposé à proximité d'une première extrémité longitudinale de la colonne 100, par exemple son extrémité avant destinée à être disposée à proximité du plafond, tandis que l'autre élément d'entretoise 200 est disposé à proximité de l'autre extrémité longitudinale de la colonne 100, par exemple son extrémité arrière destinée à être disposé à proximité du sol.

En variante, on peut prévoir par exemple un troisième élément d'entretoise disposé à proximité du milieu de la colonne.

On peut également prévoir une pluralité d'éléments d'entretoise. Le nombre d'éléments d'entretoise maximal dépend de la hauteur des éléments d'entretoise et de la hauteur totale de la colonne.

Les éléments d'entretoise sont de préférence répartis régulièrement le long de l'ossature 110, c'est-à-dire espacés entre eux d'une même distance prédéterminée.

Préférentiellement, l'ossature 110 mesure entre 50 centimètres et 4 mètres de hauteur le long de l'axe longitudinal X, par exemple environ 2,5 mètres. Chaque élément d'entretoise 200 mesure quelques centimètres de hauteur selon l'axe longitudinal X.

En particulier, chaque élément d'entretoise 200 présente de préférence une hauteur H mesurée le long de l'axe longitudinal de la colonne comprise entre 1 et 20 centimètres, de préférence comprise entre 2 et 10 centimètres, par exemple égale à 4 centimètres (figure 1).

Chaque joue 120 comporte un flanc 121A globalement rectangulaire, allongé selon l'axe longitudinal X de la colonne 100.

Chaque flanc 121A présente ici un profil légèrement arqué pour une question purement esthétique. Chaque joue 120 comporte, le long des deux bords longitudinaux de son flanc 121A, deux retours 121B parallèles qui s'étendent globalement perpendiculairement au flanc 121A (figures 1 à 3).

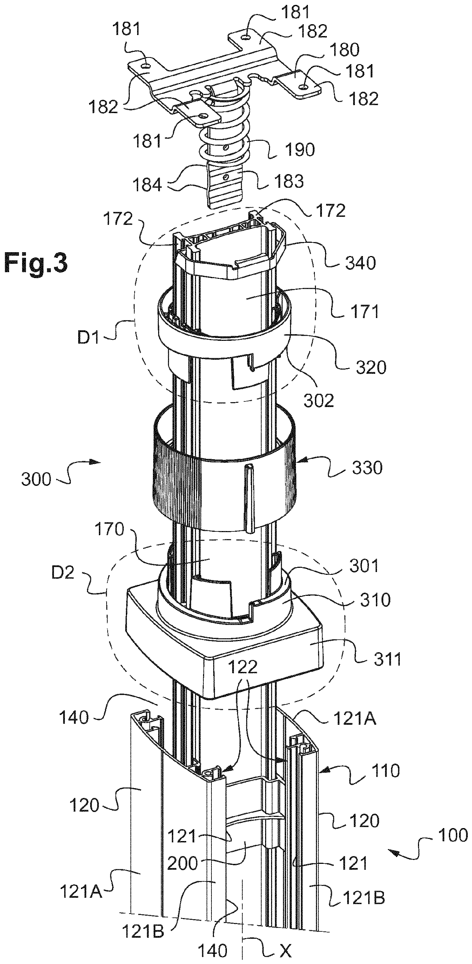

Lorsque les joues 120 sont reliées par les éléments d'entretoise 200 (voir figure 3), les retours 121B de chaque joue 120 sont orientés vers l'intérieur de la colonne 100.

Un retour 121B d'une des joues 120 s'étend en direction d'un retour 121B de l'autre joue 120.

Les deux bords libres 121 des deux retours 121B en vis-à-vis délimitent les bords de l'ouverture longitudinale 140 d'un conduit formé par l'ossature 110.

A proximité de chaque retour 121B, la face interne du flanc 121A porte une structure d'accrochage 122 profilée le long de l'axe longitudinal X de la colonne.

Cette structure d'accrochage 122 sert au montage des tronçons de couvercle (non représentés) pour fermer l'ouverture longitudinale 140 de chaque conduit de la colonne 100. Elle sert également au montage des divers appareillages électriques (non représentés) dans les conduits de la colonne 100.

Généralement, les appareillages électriques sont montés sur des supports encliquetés sur cette structure d'accrochage 122, de telle sorte que l'avant desdits appareillages apparaisse au travers de l'ouverture longitudinale 140 du conduit accueillant les appareillages. Ces appareillages ferment alors localement cette ouverture longitudinale 140.

En variante, on peut également prévoir que le socle de chaque mécanisme d'appareillage électrique s'accroche directement à la structure d'accrochage 122.

Les tronçons de couvercle, ici, non représentés, présentent une forme allongée et sont destinés à fermer les ouvertures longitudinales 140 des conduits aux endroits où aucun appareillage électrique n'est installé. Ainsi, les quatre faces de la colonne 100 sont fermées et la sécurité électrique est assurée.

Ces tronçons de couvercle comprennent chacun un panneau de fermeture sensiblement rectangulaire muni de moyens d'encliquetage sur la structure d'accrochage 122.

Chaque joue 120 comprend également, sur sa face interne tournée vers l'intérieur de la colonne 100, des moyens de montage de l'élément d'entretoise 200, adaptés à coopérer à retenue avec des moyens de montage complémentaires de chaque élément d'entretoise 200.

Ici, il s'agit de moyens de montage par encliquetage.

Les moyens de montage complémentaires de chaque élément d'entretoise 200 sont situés sur deux parois de montage opposées de cet élément d'entretoise.

Une partie centrale de l'élément d'entretoise 200 forme avec les parois de montage un manchon qui s'étend, dans l'ossature 110, selon l'axe longitudinal X (figure 3).

La partie centrale comporte ici à cet effet deux parois s'étendant en vis-à-vis, parallèlement l'une à l'autre entre les deux parois de montage.

Ce manchon accueille la perche 170 télescopique (figure 3) du dispositif de mise en appui de l'ossature 110.

La perche 170 est plus précisément introduite dans le manchon formé par la partie centrale de l'élément d'entretoise 200 situé à proximité de l'extrémité avant de l'ossature 100, c'est-à-dire à proximité de l'extrémité de l'ossature la plus proche du plafond.

La section transverse du manchon délimité par la partie centrale de l'élément d'entretoise 200 présente à cette effet une forme semblable à celle de la section transverse de la perche 170.

Cette section transverse présente ici une forme en H.

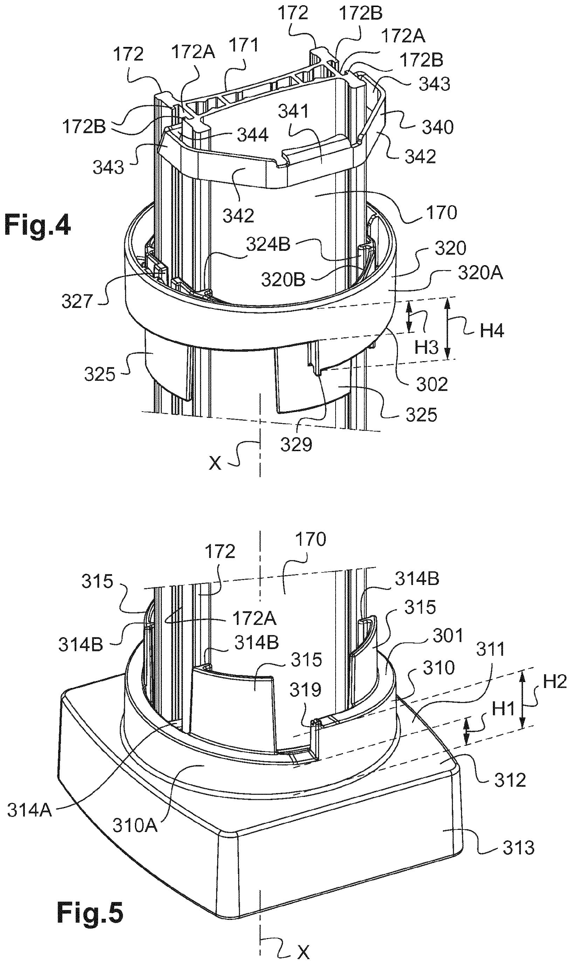

La perche 170, telle que représentée sur les figures 1 et 4, comprend une lame creuse longitudinale 171 munie, le long de ses bord longitudinaux, d'ailes latérales longitudinales 172 qui s'étendent de part et d'autre de la lame creuse longitudinale 171, sensiblement perpendiculairement à celle-ci (figures 3 et 4).

Une rainure latérale 172A est ménagée dans la face externe de chaque aile latérale 172 de la perche 170. Cette rainure 172A s'étend longitudinalement le long de la perche 170 et s'ouvre vers l'extérieur de la perche 170.

Chaque rainure 172A de la perche 170 s'étend au milieu de chaque aile latérale 172. Chaque rainure 172A présente par ailleurs une section en T qui s'élargit vers son fond, de telle sorte que l'ouverture longitudinale délimitée par le débouché de la rainure 172A, sur la face externe de l'aile latérale 172, est bordée de deux éléments de paroi rentrants 172B (figure 4).

Les dimensions transverses internes du manchon formé par la partie centrale 220 de l'élément d'entretoise 200 sont sensiblement égales, à un jeu près, aux dimensions externes de cette perche 170, de sorte à autoriser le coulissement de la perche 170 dans le manchon.

A son extrémité avant, située à l'extérieur de l'ossature 110, la perche 170 est raccordée à une plate-forme 180 pourvue de moyens permettant sa fixation à une paroi horizontale située au-dessus du sol et avantageusement au plafond (voir figure 3).

La plate-forme 180 est une plaque métallique rigide. Plus précisément, comme le montre la figure 3, cette plate-forme 180 comprend une partie plane de fixation sur le plafond, en forme de H, avec quatre pattes de fixation 182 s'étendant, de part et d'autre d'un tronc central rigide, perpendiculairement à l'axe longitudinal X de la colonne 100 lorsque l'ossature 110 et la perche 170 sont fixées sur cette plate-forme 180.

Les pattes de fixation 182 comprennent chacune un orifice 181 pour le passage de moyens de fixation sur le plafond, tels que des vis. Elles sont appliquées contre le plafond.

Cette plate-forme 180 comprend également une partie de coopération avec la perche 170, comprenant une languette 183 qui est pliée à 90° par rapport au tronc central rigide de la partie de fixation, de manière à s'étendre parallèlement à l'axe longitudinal X de la colonne 100 (figure 3) lorsque l'ossature 110 et la perche 170 sont fixées sur cette plate-forme 180.

Cette languette 183 est insérée dans la lame creuse longitudinale 171 de la perche 170 (figures 1 à 4).

Elle comporte, à proximité de son extrémité libre, deux zones 184 en relief sur l'une des faces de la languette 183, qui s'étendent perpendiculairement à l'axe longitudinal de la languette 183 et donc à l'axe longitudinal X de la colonne 100 lorsque la languette 183 est reçue dans la perche 170 (figure 3).

Ces zones 184 en relief sont adaptées à coopérer avec la perche 170 pour guider la languette 183 dans la lame creuse longitudinale 171.

Le dispositif de mise en appui de la colonne comprend de préférence une partie de hauteur ajustable le long de l'axe longitudinal de la colonne.

Plus précisément, la colonne 100 comprend par exemple une partie comprimable, adaptée à être comprimée de manière réversible, qui est interposée entre l'extrémité avant de la perche et le plafond. Cette partie comprimable permet la mise en appui facile de la colonne entre les deux parois choisies, et une adaptation rapide de la hauteur de la colonne à la distance séparant ces deux parois.

Cette partie comprimable peut comprendre tout moyen connu de l'Homme du métier. Il peut notamment s'agir d'un ressort de compression ou d'un autre type de ressort, par exemple un ressort à lames, d'une ou plusieurs rondelles élastiques ou une ou plusieurs rondelles ondulées, par exemple du type rondelle élastique Ondufil® à spires inversées. Il peut également s'agir d'un anneau en caoutchouc du type Silentbloc®, ou d'un élément comportant un coussin d'air, notamment un vérin à air.

En variante, il est possible de prévoir des moyens de fixation de la languette à différentes hauteurs dans la lame creuse longitudinale de la perche, par exemple par vissage, pour permettre la mise en appui de la colonne entre les deux parois choisie, et l'adaptation de la hauteur de la colonne à la distance séparant ces deux parois.

Ici, comme le montrent les figures 1 et 2, un ressort de compression 190 est interposé entre l'extrémité avant de la perche 170, orientée vers le plafond, et le plafond.

Plus précisément, ici, le ressort de compression 190 est interposé entre la partie de fixation de la plate-forme 180 et l'extrémité avant de la perche 170. Il est à cet effet enfilé autour de la partie de la languette 183 de la plate-forme 180 qui fait saillie hors de la perche 170.

De manière remarquable, le dispositif de mise en appui de la colonne 100, comprend une première surface de came 301 solidaire de ladite ossature 110, une deuxième surface de came 302 associée à ladite perche 170, et une bague de verrouillage 330 agencée pour coopérer avec les première et deuxième surfaces de came 301, 302 afin de déplacer la perche 170 par rapport à l'ossature 110 lors de la rotation de ladite bague de verrouillage 330 autour de l'axe longitudinal X de la colonne 100 (voir figure 3).

Comme expliqué par la suite, cet agencement permet une simplification de fabrication et de mise en œuvre du dispositif de mise en appui en évitant la coopération de surfaces filetées et en supprimant des étapes de vissage/dévissage fastidieuses.

Plus précisément, ici, comme le montre la figure 5, ladite première surface de came 301 appartient à un premier anneau 310 solidaire d'un couvercle 311 venant coiffer l'extrémité avant de l'ossature 110 à travers laquelle la perche 170 fait saillie. Le couvercle 311 forme une seule pièce avec le premier anneau 310.

Le couvercle 311 est représenté plus particulièrement sur les figures 5, 8, 9 et 15 à 19.

Le couvercle 311 comporte une plaque avant 312 dont la forme est similaire à celle de la section de l'ossature 110, c'est-à-dire sensiblement carrée, entourée à l'arrière par une paroi latérale tombante 313 qui vient s'appliquer autour de la face externe de l'extrémité avant de l'ossature 110.

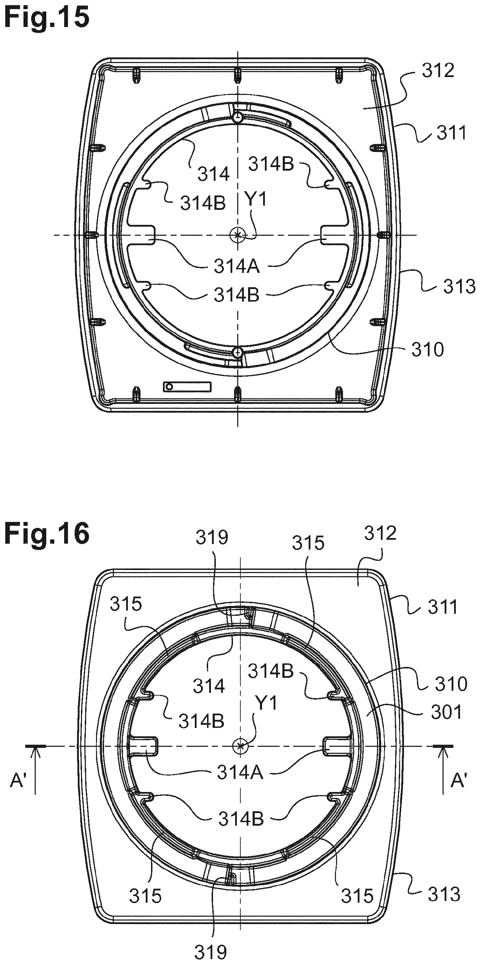

La plaque avant 312 du couvercle 311 comporte une ouverture centrale 314 circulaire autorisant le passage de la perche 170 (figures 15 et 16).

Cette ouverture centrale 314 d'axe central Y1 est bordée à l'avant par le premier anneau 310 qui, globalement, s'élève sensiblement perpendiculairement à la plaque avant 312 et présente une tranche libre d'extrémité formant la surface de came 301.

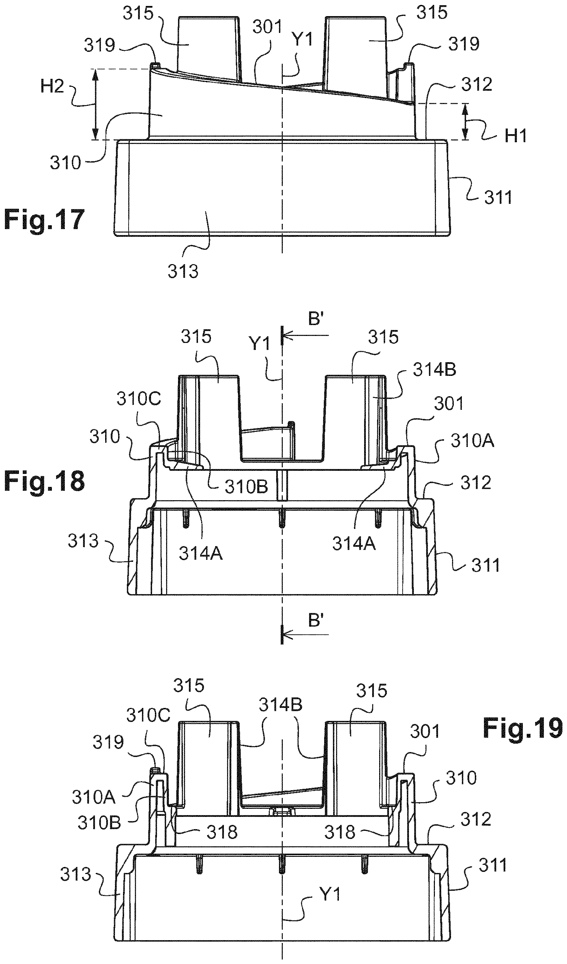

Comme le montre les figures 18 et 19, ce premier anneau 310 est réalisé en pratique par une double paroi cylindrique comprenant une paroi externe 310A et une paroi interne 310B concentriques autour de l'axe central Y1. La paroi externe 310A s'élève à partir de la plaque avant 312, parallèlement à l'axe central Y1. La paroi interne 310B s'étend à l'intérieur de la paroi externe 310A.

Les deux parois externe 310A et interne 310B présentent une hauteur, mesurée le long de l'axe central Y1, variable et sont reliées par une paroi intermédiaire 310C qui forme la tranche libre d'extrémité du premier anneau 310 dont la face externe forme la première surface de came 301. Cette première surface de came présente donc une forme annulaire.

Lorsque le couvercle 311 est rapporté à l'extrémité avant de l'ossature 110, l'axe central Y1 de son ouverture central 314 vient en coïncidence avec l'axe longitudinal X de la colonne 100. En outre, la première surface de came 301 est alors tournée vers l'avant.

Cette première surface de came 301 forme deux demi-tours d'une première hélice s'enroulant autour dudit axe central Y1. Elle présente ainsi globalement une forme hélicoïdale sur au moins une partie de sa circonférence. La première surface de came s'étend ainsi autour de l'axe central Y1 et sur une hauteur non nulle le long de cet axe central Y1.

En d'autres termes, comme le montre mieux la figure 17, par rapport à la base du premier anneau 310 faisant la jonction avec la plaque avant 312 du couvercle 311, la première surface de came 301 s'élève continûment depuis une première hauteur H1 jusqu'à une deuxième hauteur H2 sur le contour du premier anneau 310 correspondant à un demi-tour, soit 180°. La première surface de came 301 comprend ensuite une première marche droite pour retomber brusquement depuis la deuxième hauteur H2 à la première hauteur H1. Cette première surface de came 301 s'élève ensuite à nouveau continûment depuis la première hauteur H1 jusqu'à la deuxième hauteur H2 sur le contour du premier anneau 310 correspondant à l'autre demi-tour, soit 180°, dans le même sens de parcours. La première surface de came 301 comprend ensuite une deuxième marche droite pour retomber brusquement de la deuxième hauteur H2 à la première hauteur H1.

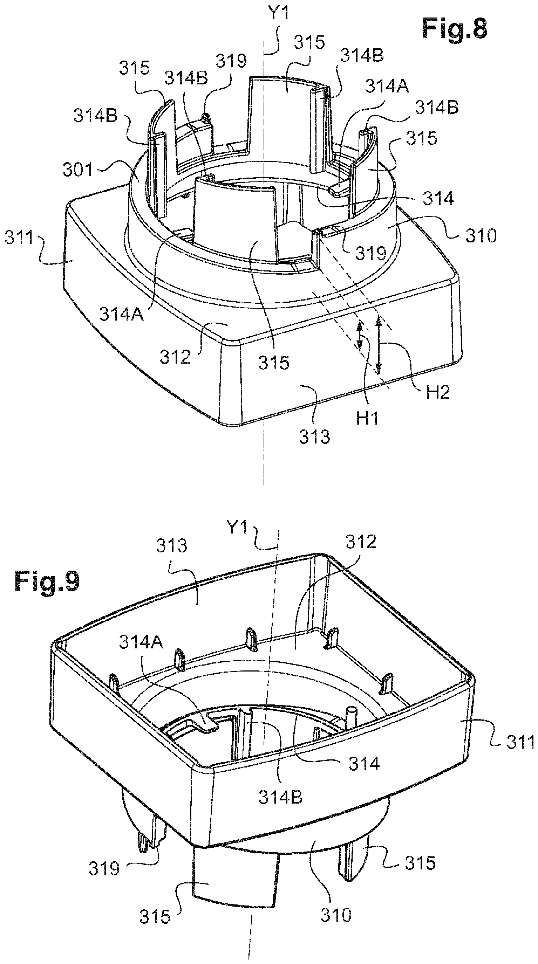

A chaque extrémité la plus haute, là où la première surface de came 301 s'élève à la deuxième hauteur H2, celle-ci porte un plot 319 (figure 5) qui s'étend en saillie, vers l'avant lorsque le couvercle 311 est rapporté à l'extrémité avant de l'ossature 110 (figures 5 et 8).

A partir de la paroi interne 310B du premier anneau 310, s'étendent des pions 314A de centrage et de guidage de la perche 170 (figures 8, 9, 15 et 16).

Plus précisément, il s'agit de deux pions 314A diamétralement opposés qui font saillie vers l'axe central Y1, dans un plan perpendiculaire à cet axe central Y1.

Chaque pion 314A est adapté à coopérer avec les rainures latérales 172A ménagées dans chaque aile latérale 172 de la perche 170 (figure 5).

Plus précisément, comme le montre la figure 5, lorsque le couvercle 311 est rapporté à l'extrémité avant de l'ossature 110 et que la perche 170 est partiellement insérée dans l'ossature 110, chaque pion 314A est partiellement logé dans la rainure latérale 172A de la perche 170, de manière à coulisser dans l'ouverture longitudinale de cette rainure latérale 172A lorsque la perche 170 coulisse dans la partie centrale 220 des entretoises 200 de l'ossature 110.

La face interne de la paroi interne 310B, tournée vers l'ouverture centrale 314 du premier anneau 310 forme un épaulement 318 (figure 19).

Dans le prolongement de la paroi interne 310B du premier anneau 310, à partir de cet épaulement 318, s'étendent des pattes 315, vers l'avant lorsque le couvercle 311 est rapporté à l'extrémité avant de l'ossature 110.

Elles sont au nombre de quatre, réparties régulièrement autour de l'axe central Y1 de manière à entourer deux à deux les ailes latérales 172 de la perche 170 lorsque celle-ci est introduite dans l'ossature 110.

Chaque patte 315 forme une portion de paroi cylindrique qui s'étend dans le prolongement de la paroi interne 310B du premier anneau 310. Chaque patte 315 comprend un bord longitudinal muni d'une nervure longitudinale 314B qui s'étend en saillie vers l'intérieur du premier anneau 310, parallèlement au pion 314A (voir figures 9, 15 et 16). Comme le montre la figure 5, lorsque le couvercle 311 est rapporté à l'extrémité avant de l'ossature 110 et que la perche 170 est partiellement insérée dans l'ossature, les deux nervures 314B d'un couple de pattes 315 encadrent l'une des ailes latérales 172 de la perche 170. Elles participent au guidage du coulissement de la perche 170.

La présence de ces nervures 314B, ainsi que la forme globalement carrée du couvercle 311 auquel est attaché le premier anneau 310 assurent que celui-ci ne pivote ni autour de la perche 170, ni autour de l'ossature 110 lorsque le couvercle 311 est rapporté à l'extrémité avant de l'ossature 110.

Le premier anneau 310 est fixé via le couvercle 311 à l'extrémité de l'ossature 110 et est solidaire de celle-ci : il ne peut ni pivoter, ni coulisser par rapport à cette ossature 110. Il est donc bloqué en pivotement et en coulissement sur l'ossature 110.

Ladite deuxième surface de came 302 appartient à un deuxième anneau 320 monté sur ladite perche 170.

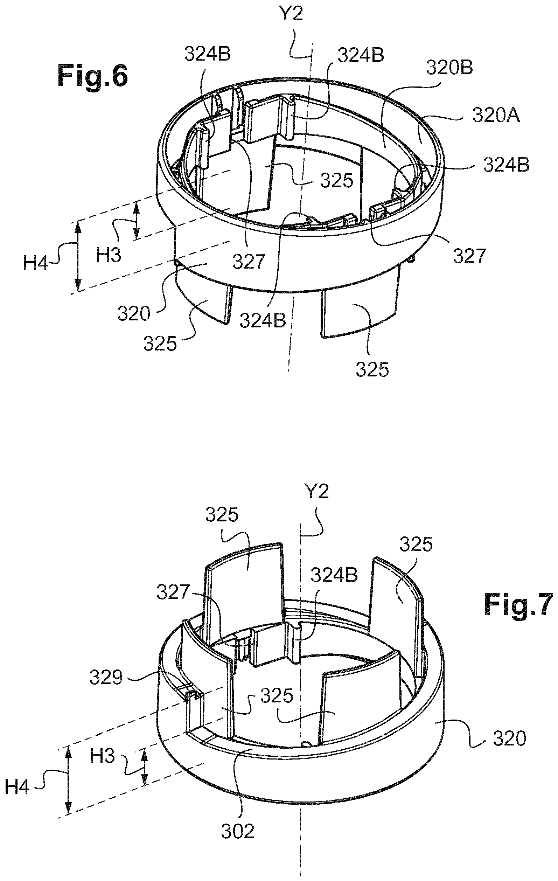

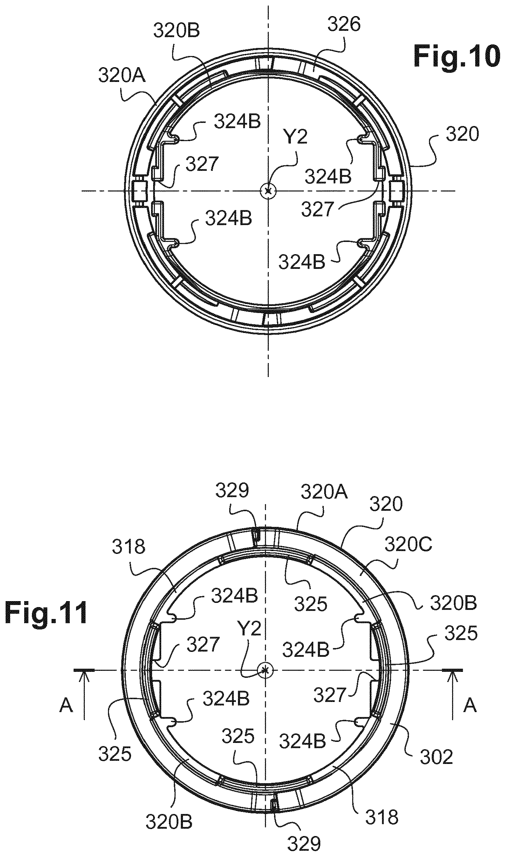

Le deuxième anneau 320 est représenté plus particulièrement sur les figures 4, 6, 7, 10 à 14.

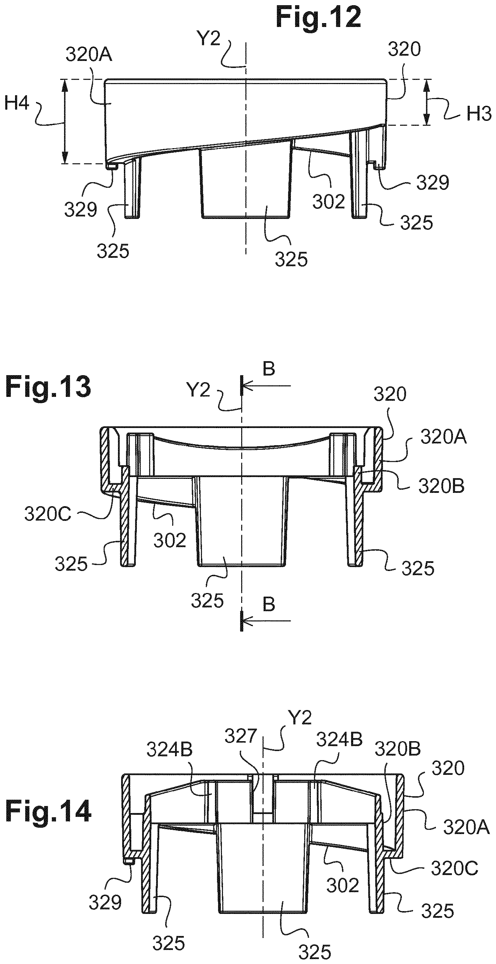

Ce deuxième anneau 320 est réalisé en pratique par une double paroi cylindrique comprenant une paroi externe 320A et une paroi interne 320B concentriques autour d'un axe central Y2 de ce deuxième anneau 320 (figures 13 et 14). Les deux parois externe 320A et interne 320B sont reliées par une paroi intermédiaire 320C qui forme la tranche du deuxième anneau 320 et dont la face externe forme la deuxième surface de came 302.

Cette deuxième surface de came présente donc une forme annulaire.

La paroi externe 320A est délimitée entre un premier bord circulaire arrière formant la base du deuxième anneau 320 et s'étendant dans un plan perpendiculaire à l'axe central Y2, et la paroi intermédiaire 320C qui porte la deuxième surface de came 302.

Lorsque le deuxième anneau 320 est monté sur la perche 170 qui est reçue dans l'ossature 110, son axe central Y2 vient en coïncidence avec l'axe longitudinal X de la colonne 100.

En outre, la deuxième surface de came 302 est alors tournée vers l'arrière. Elle s'étend en vis-à-vis de la première surface de came 301.

Cette deuxième surface de came 302 forme deux demi-tours d'une deuxième hélice s'enroulant autour dudit axe central Y2 (figures 12 à 14).

Elle présente ainsi globalement une forme hélicoïdale sur au moins une partie de sa circonférence. La deuxième surface de came s'étend ainsi autour de l'axe central Y2 et sur une hauteur non nulle le long de cet axe central Y2.

Lesdites parois internes 320B et externe 320A présentent à cet effet une hauteur variable, mesurée le long de l'axe central Y2.

En d'autres termes, comme le montrent mieux les figures 4 et 12, par rapport à la base du deuxième anneau 320 qui s'étend dans un plan perpendiculaire à l'axe central Y2 du deuxième anneau 320, la deuxième surface de came 302 s'élève continûment depuis une troisième hauteur H3 jusqu'à une quatrième hauteur H4 lorsque l'on suit le contour du deuxième anneau 320 correspondant à un demi-tour, soit 180°. La deuxième surface de came 302 comprend ensuite une première marche droite pour retomber brusquement depuis la quatrième hauteur H4 à la troisième hauteur H3. Cette deuxième surface de came 302 s'élève ensuite à nouveau continûment depuis la troisième hauteur H3 jusqu'à la quatrième hauteur H4 sur le contour de l'anneau correspondant à l'autre demi-tour, soit 180°, parcouru dans le même sens. La deuxième surface de came 302 comprend ensuite une deuxième marche droite pour retomber brusquement depuis la quatrième hauteur H4 à la troisième hauteur H3 (figure 12).

A chaque extrémité la plus haute, là où la deuxième surface de came 302 s'élève à la quatrième hauteur H4, celle-ci porte un plot 329 (figures 4 et 12) qui s'étend en saillie, vers l'arrière lorsque le deuxième anneau est fixé sur la perche 170.

Dans le prolongement de la paroi interne 320B du deuxième anneau 320 s'étendent des pattes 325, vers l'arrière lorsque le deuxième anneau 320 est fixé sur la perche 170.

Elles sont au nombre de quatre et sont réparties régulièrement autour de l'axe central Y2 du deuxième anneau 320, de manière à être insérées entre les pattes 315 s'étendant vers l'avant du premier anneau 310.

Ces pattes 325 forment une portion de paroi cylindrique qui s'étend dans le prolongement de la paroi interne 320B du deuxième anneau 320.

Il est également prévu, en saillie de la face interne de la paroi interne 320B du deuxième anneau 320, des nervures de guidage 324B qui s'étendent en saillie vers l'intérieur du deuxième anneau 320, en longueur parallèlement à l'axe central Y2 et en hauteur parallèlement à un diamètre du deuxième anneau 320. Ces nervures 324B sont disposées de manière à encadrer l'aile latérale 172 de la perche 170 lorsque celle-ci passe à travers le deuxième anneau 320, de manière similaire aux nervures 314B du premier anneau 310 (figure 4).

Elles participent au guidage du coulissement de la perche 170. En outre, elles interdisent tout pivotement du deuxième anneau 320 autour de la perche 170. Le deuxième anneau 320 est bloqué en pivotement autour de la perche 170.

Lorsque les premier et deuxième anneaux 310, 320 sont respectivement en place sur l'ossature 110 et la perche 170, ils sont agencés de telle sorte que les première et deuxième marches des première et deuxième surfaces de came 301, 302 se font face.

En conséquence, les plots 319, 329 prévus en saillie de chaque surface de came 301, 302, se font face aux endroits où la première et la deuxième surfaces de came 301, 302 s'élèvent à la deuxième et à la quatrième hauteurs H2, H4.

En outre, lesdites première et deuxième surfaces de came 301, 302 s'enroulent selon des sens opposés, à partir d'une même position angulaire autour de l'axe longitudinal X de la colonne 100.

Ici, les hélices des première et deuxième surfaces de came 301, 302 sont identiques au sens de l'enroulement près.

En conséquence, les différences entre les hauteurs H2 et H1, d'une part, et H3 et H4, d'autre part, sont égales.

Ici, les parois externes 310A, 320A sont identiques. En conséquence, les première et troisième hauteurs H1 et H3 sont égales, et les deuxième et quatrième hauteurs H2 et H4 sont égales.

Les première et deuxième surfaces de came 301, 302 sont ici les images miroir l'une de l'autre.

Les dimensions respectives des pattes 315, 325 des premier et deuxième anneaux 310, 320 sont telles qu'elles s'imbriquent les unes dans les autres lorsque les deux anneaux 310, 320 sont montés sur l'ossature 110 et la perche 170. Elles sont jointives et forment ensemble une paroi cylindrique.

Les hauteurs respectives des pattes 315 du premier anneau 310 et des pattes 325 du deuxième anneau 320, le long des axes centraux Y1, Y2 des deux anneaux 310, 320, sont telles que ces pattes restent au moins partiellement imbriquées les unes dans les autres lors de la rotation de la bague de verrouillage 330.

Les bords longitudinaux des pattes 315, 325 des premier et deuxième anneaux 310, 320 s'appuient les uns contre les autres pour empêcher toute rotation du deuxième anneau 320 par rapport au premier anneau 310.

En outre, la coopération de ces pattes 315, 325 lors du coulissement de la perche 170, actionné, comme expliqué plus loin, par la rotation de la bague de verrouillage 330, confère de la rigidité à l'ensemble du dispositif de mise en appui 300.

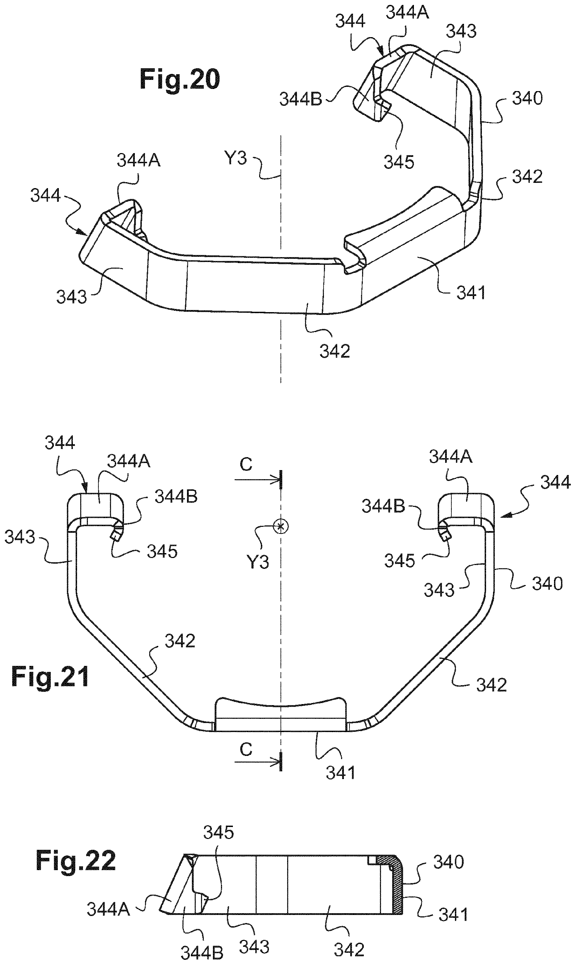

Le deuxième anneau 320 comprend en outre des moyens de coopération avec la perche 170, sous la forme d'une bride 340. Cette bride 340 est plus particulièrement représentée sur les figures 3, 4, 20, 21 et 22.

Elle est réalisée dans une matière présentant une dureté supérieure à celle de la matière de la perche. Ici, par exemple, la bride est réalisée en acier.

Elle se présente sous la forme d'une bande métallique conformée de manière à pouvoir être insérée dans une gorge cylindrique 326 du deuxième anneau 320, délimitée entre les parois externe 320A et interne 320B de ce deuxième anneau 320.

La bride 340 s'étend globalement le long d'un demi-cercle. Elle présente ici plus précisément la forme d'un demi-octogone. Ici, il s'agit d'un demi-cylindre de base octogonal et d'axe central Y3. Elle comprend ainsi un segment central 341, deux segments intermédiaires 342 disposés autour du segment central 341 ainsi que deux segments d'extrémité 343. Ces différents segments s'étendent selon des plans moyens parallèles à l'axe central Y3.

Les deux segments d'extrémité 343 s'étendent au repos sensiblement parallèlement l'un à l'autre. Ils comportent en outre, à leur extrémité libre, un retour 344 replié vers l'intérieur de la bride 340, en forme de crochet.

Plus précisément, le retour 344 comporte une première partie 344A qui s'étend dans un plan sensiblement perpendiculaire au segment d'extrémité 343, incliné par rapport à l'axe central Y3, et une deuxième partie 344B repliée en direction du segment central 341 de la bride 340. A partir de cette deuxième partie 344B s'étend, en direction du segment d'extrémité 343 portant le retour 344, une pointe 345.

La paroi interne 320B du deuxième anneau 320 comporte en outre ici deux fentes 327 diamétralement opposées (figures 4, 6, 7, 10 et 11). La gorge cylindrique 326 ménagées entre les parois externe 320A et interne 320B du deuxième anneau 320 communique donc avec l'ouverture centrale du deuxième anneau 320 à travers ces fentes 327.

Chaque fente 327 est située à mi-chemin entre les nervures de guidage 324B qui s'étendent à partir de la face interne de la paroi interne 320B tournée vers l'ouverture centrale du deuxième anneau 320.

Ainsi, lorsque le deuxième anneau 320 est en place autour de la perche 170, chaque fente 327 s'étend en vis-à-vis de l'une des rainures latérales 172A des ailes latérales 172 de la perche 170.

Lorsque la bride 340 est mise en place dans la gorge cylindrique 326 du deuxième anneau 320, les retours 344 traversent les fentes 327, de manière à ce que la deuxième partie 344B de ce retour 344, muni de la pointe 345, s'étend en dehors de la gorge cylindrique 326, et se loge dans la rainure latérale 172A de la perche 170 (figure 4). Les pointes 345 viennent s'accrocher sur les faces internes des parois rentrantes 172B de la rainure latérale 172A. Ici, les pointes 345 de la bride 340 en acier viennent griffer les faces internes de la perche 170 en aluminium.

La bride 340 forme ainsi une butée pour le deuxième anneau 320, dont le coulissement le long de la perche 170 vers son extrémité avant est bloqué par la bride 340. Le deuxième anneau 320 est ainsi bloqué en coulissement vers l'avant et en pivotement autour de la perche 170.

En outre, lorsque le deuxième anneau 320 est en place sur la perche 170, celui-ci est également bloqué en coulissement vers l'arrière par la bague de verrouillage 330.

En variante, le deuxième anneau peut être monté fixement sur la perche par tout moyen connu de l'Homme du métier. Il peut par exemple être vissé sur la perche.

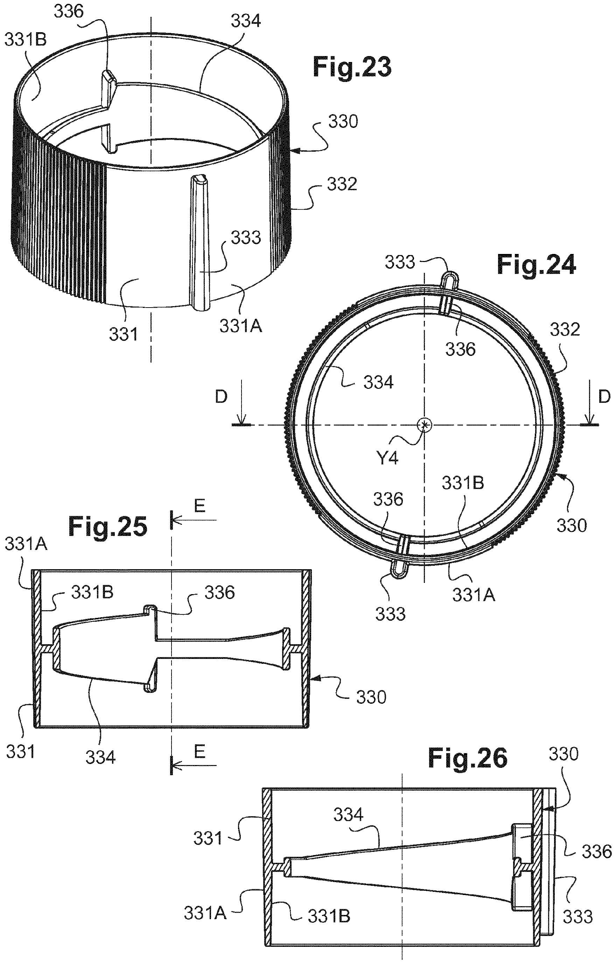

La bague de verrouillage 330 est plus particulièrement représentée sur les figures 23 à 26.

Cette bague comprend un manchon 331 cylindrique d'axe central Y4, adapté à entourer lesdits premier et deuxième anneaux 310, 320 lorsque la bague de verrouillage 330 est montée sur la colonne 100.

L'axe central Y4 du manchon 331 est confondu avec l'axe longitudinal X de la colonne 100 lorsque celui-ci est rapporté sur ladite colonne 100.

De manière générale, la face interne 331B du manchon 331 orientée vers l'axe central Y4 porte en relief et en vis-à-vis, c'est-à-dire diamétralement opposés, au moins deux éléments de coopération avec lesdites première et deuxième surfaces de came.

En variante, on pourrait prévoir un plus grand nombre d'éléments de coopération répartis régulièrement le long de la face interne 331B du manchon 331, par exemple trois ou quatre éléments de coopération. La forme des surfaces de came est alors ajustée en conséquence, par exemple trois tiers de tour d'hélice ou quatre quarts de tour d'hélice.

Chaque élément de coopération comporte deux surfaces d'appui opposées, disposées à une distance non nulle l'une de l'autre le long de l'axe central Y4 du manchon 331, parallèlement à cet axe central Y4 et disposée chacune en contact avec l'une desdites surfaces de came. Chaque élément de coopération peut éventuellement comporter deux reliefs distincts portant chacun l'une de ces surfaces d'appui.

Ici, la face interne 331B du manchon 331 orientée vers l'axe central Y4 porte en relief et en vis-à-vis deux montants 336 parallèles entre eux et parallèles à l'axe central Y4. Ils s'étendent sur une partie de la hauteur de la face interne 331B du manchon 331. Ces montants 336 constituent ici lesdits éléments de coopération.

Chaque montant 336 comporte deux extrémités opposées adaptées à s'appuyer respectivement sur les première et deuxième surfaces de came 301, 302 des premier et deuxième anneaux 310, 320 lorsque la bague de verrouillage 330 est montée sur la colonne 100, entre lesdits premier et deuxième anneaux 310, 320. Les extrémités opposées des montants 336 présentent à cet effet une forme arrondie. Elles constituent lesdites surfaces d'appui des éléments de coopération constitués par les montants.

Ici, les deux montants 336 sont reliés par une nervure 334 qui s'étend sur la circonférence de la face interne 331B du manchon 331.

Cette nervure présente ici une forme en T (figure 25 et 26).

Le manchon 331 porte en outre ici, sur sa face externe 331A, deux nervures 333 en relief qui sont positionnées au droit des montants 336 portés par la face interne 331B du manchon 331. Ces nervures 333 facilitent la manipulation de la bague de verrouillage 330 par l'installateur et constituent des repères visuels de la position des montants 336 de la face interne 331B du manchon 331. La face externe 331A du manchon 331 comprend également des stries 332 qui s'étendent longitudinalement, c'est-à-dire selon une direction parallèle à l'axe central Y4 de la bague de verrouillage 330.

Les stries 332 se trouvent sur deux zones diamétralement opposées de la face externe 331A du manchon 331, couvrant chacune un secteur angulaire d'environ 100° et elles s'étendent sur toute la hauteur de la bague de verrouillage 330. Elles améliorent la prise en main de la bague de verrouillage 330 par l'installateur (voir figure 23).

Comme le montre la figure 3, lesdits premier et deuxième anneaux 310, 320 sont ici respectivement fixé sur l'ossature 110 et associé la perche 170 de telle sorte que les endroits des premiers et deuxième anneaux 310, 320 où la hauteur de la paroi externe 310A, 320A est minimale ou maximale se font face (figure 3).

L'écart entre les première et deuxième surfaces de came 301, 302 varie donc entre un écart minimal, aux endroits où les parois externes 310A, 320A des deux anneaux 310, 320 présentent une hauteur maximale H2, H4, et un écart maximal, aux endroits où les parois externes 310A, 320A des deux anneaux 310, 320 présentent une hauteur minimale H1, H3.

Dans une première position angulaire de la bague de verrouillage 330 correspondant à la figure 1, les montants 336 sont logés entre les première et deuxième surfaces de came 301, 302, aux endroits où l'écart entre les surfaces de came 301, 302 est maximal.

Les surfaces arrondies des extrémités opposées de chaque montant 336 sont en contact avec les surfaces de came 301, 302.

Les plots 319, 329 s'étendant en saillie des surfaces de came 301, 302 viennent alors par paire en butée l'un contre l'autre et l'extrémité libre des pattes arrière 325 du deuxième anneau 320 prend appui sur l'épaulement 318 de la paroi interne 310B du premier anneau 310.

Les premier et deuxième anneaux 310, 320 sont alors, selon l'axe longitudinal X, au plus près possible l'un de l'autre.

Le deuxième anneau 320 est bloqué entre la bague de verrouillage 330 et la bride 340, au contact de ces deux éléments.

Dans cette première position angulaire, la bride 340 est plaquée dans la gorge 326 du deuxième anneau 320 sous l'effet du poids de la perche 170.

La perche 170 est dans une position basse, dans laquelle la longueur de la perche 170 faisant saillie hors de l'ossature est la plus petite, et le ressort de compression 190 est détendu (voir figure 1).

Lorsque la bague de verrouillage 330 est pivotée dans le sens horaire à partir de cette première position, les formes arrondies des extrémités opposées des montants 336 glissent sur les surfaces de came 301, 302. Comme l'écart entre les surfaces de came 301, 302 se réduit au fur et à mesure de la rotation de la bague de verrouillage 330, le deuxième anneau 320 est repoussé vers le plafond (ou la paroi d'appui si celle-ci est différente du plafond) pour permettre le passage des montants 336 entre les deux surfaces de came 301, 302.

Le deuxième anneau 320, en butée contre la bride 340 fixée sur la perche 170, entraîne avec lui la perche 170, qui coulisse dans l'ossature 110 de manière à s'écarter de cette ossature 110, et se rapprocher du plafond ou de la paroi d'appui si celle-ci est différente du plafond.

La perche 170 est alors solidaire du deuxième anneau 320 lorsque celui-ci est déplacé vers l'avant, c'est-à-dire vers la paroi d'appui. La perche 170 et le deuxième anneau 320 sont solidaires en coulissement vers l'avant.

La distance maximale d'écartement de la perche 170 par rapport à l'ossature 110 lors du pivotement de la bague de verrouillage 330 est égale à la somme des différences entre H2 et H1, d'une part, et entre H3 et H4, d'autre part.

Ici, cette distance d'écartement est de 18 millimètres, chaque différence de hauteur entre H2 et H1, d'une part, et entre H3 et H4, d'autre part, étant égale à 9 millimètres.

A la fin de la course de la bague de verrouillage 330, dans une deuxième position angulaire de la bague de verrouillage correspondant à la figure 2, la perche 170 est dans une position haute, dans laquelle la longueur de la perche faisant saillie hors de l'ossature est la plus grande, et le ressort de compression 190 est comprimé (figure 2). La longueur de la perche 170 faisant saillie de l'ossature 110 est augmentée de la distance d'écartement définie ci-dessus.

La course angulaire de la bague de verrouillage 330 est limitée par la butée des extrémités opposées de chaque montant 336 avec les plots 319, 329 se faisant face. L'amplitude angulaire de pivotement de la bague de verrouillage 330 est ainsi ici limitée à 170°.

En variante, la course en pivotement de la bague de verrouillage peut être limitée à une valeur d'angle comprise entre 80 et 170°.

Dans la deuxième position angulaire de la bague de verrouillage 330, la mise en appui de la colonne 100 est assurée par la pression exercée par le ressort de compression 190 vers le sol sur l'ossature 110, par l'intermédiaire de la perche 170.

Ainsi, les différents éléments de la colonne 100 sont positionnés les uns par rapport aux et l'ossature 110 est assemblée.

Le couvercle 311 est rapporté sur l'extrémité avant de l'ossature 110, la perche 170 est insérée dans l'ossature 110, via l'ouverture centrale 314 du premier anneau 310.

Sur la perche 170 sont positionnés successivement la bague de verrouillage 330 et le deuxième anneau 320 comportant la bride 340. Ces éléments du dispositif de mise en appui 300 sont positionnés verticalement les uns par rapport aux autres de telle sorte que, dans la première position angulaire de la bague de verrouillage 330, le ressort de compression 190 est détendu. Après avoir positionné la colonne à l'endroit prévu, l'installateur tire la perche 170 jusqu'à ce que la plate-forme 180 soit en contact avec le plafond, puis il fixe le deuxième anneau 320 sur la perche 170 au moyen de la bride 340.

La bride 340 est positionnée sur la perche 170 en fonction de la hauteur entre l'extrémité avant de l'ossature 110 et la paroi d'appui de la colonne 100, de manière à bloquer le deuxième anneau 320 entre la bague de verrouillage 330 et la bride 340 dans la première position angulaire.

En pratique, la perche 170 est solidaire du deuxième anneau 320, en particulier, solidaire en pivotement et en coulissement.

Ensuite, l'installateur n'a plus qu'à saisir manuellement la bague de verrouillage 330 et la faire tourner de 170° dans le sens horaire.

Ce faisant, il écarte la perche 170 de l'ossature 110 de la distance d'écartement prédéterminée et comprime le ressort de compression 190.

Il verrouille ainsi la fixation de la colonne 100 par la pression appliquée vers le sol par le ressort de compression 190 sur la perche 170 et donc l'ossature 110.

Pour démonter la colonne 100, l'installateur déverrouille sa fixation en faisant tourner la bague de verrouillage de 170° dans le sens anti-horaire. Le ressort 190 se détend et la colonne 100 peut être démontée.

La perche 170 est alors solidaire du deuxième anneau 320 en coulissement vers l'arrière, c'est-à-dire vers le sol, en raison du poids de la perche 170.

L'ensemble du dispositif de mise en appui 300 peut être masqué par un faux plafond non représenté arrivant à effleurement de l'extrémité avant de l'ossature 110.

L'installateur peut éventuellement fixer la plate-forme 180 au plafond, ainsi que le pied de la colonne au sol (non représenté).

En variante, la colonne selon l'invention peut s'étendre entre deux parois quelconques.

En variante, on peut prévoir que la colonne présente une forme parallélépipédique avec une base de forme quadrilatère quelconque, par exemple hexagonale ou octogonale et que l'ossature de la colonne comporte plus de deux joues, par exemple trois ou quatre joues, délimitant entre elles plus de deux conduits, par exemple trois ou quatre conduits.

## Revendications

1. Colonne (100) pour le support d'appareillage électrique, et/ou le cheminement de câbles ou de conducteurs de transport d'énergie, s'étendant selon un axe longitudinal (X) et comportant une ossature (110) allongée délimitant au moins un conduit, et un dispositif de mise en appui (300) de cette ossature (110) entre deux parois, comprenant une perche (170) télescopique, ledit dispositif de mise en appui (300) comprend une première surface de came (301) solidaire de ladite ossature (110), une deuxième surface de came (302) associée à ladite perche (170), lesdites première et deuxième surfaces de came étant annulaires, **caractérisé en ce que** ladite perche (170) télescopique est partiellement logée dans ladite ossature (110) et dont une partie s'étend dans le prolongement de ladite ossature (110), et ledit dispositif de mise en appui (300) comprend une bague de verrouillage (330) portant, sur une face interne, deux montants (336) parallèles à l'axe longitudinal (X) de la colonne (100), dont les extrémités opposées sont adaptées à s'appuyer contre les première (301) et deuxième (302) surfaces de came afin de déplacer la perche (170) par rapport à l'ossature (110) lors de la rotation de ladite bague de verrouillage (330) autour de l'axe longitudinal (X) de la colonne (100).

2. Colonne (100) selon la revendication 1, dans laquelle ladite première surface de came (301) appartient à un premier anneau (310) solidaire d'un couvercle (311) venant coiffer l'extrémité de l'ossature (110) à travers laquelle la perche (170) fait saillie.

3. Colonne (100) selon l'une des revendications 1 et 2, dans laquelle ladite deuxième surface de came (302) appartient à un deuxième anneau (320) monté sur ladite perche (170).

4. Colonne (100) selon l'une des revendications 1 à 3, dans laquelle ladite première surface de came (301) forme deux demi-tours d'une première hélice s'enroulant autour dudit axe longitudinal (X).

5. Colonne (100) selon l'une des revendications 1 à 4, dans laquelle ladite deuxième surface de came (302) forme deux demi-tours d'une deuxième hélice s'enroulant autour dudit axe longitudinal (X).

6. Colonne (100) selon les revendications 4 et 5, dans laquelle lesdites première et deuxième hélices s'enroulent selon des sens opposés, à partir d'une même position angulaire autour de l'axe longitudinal (X) de la colonne (100).

7. Colonne (100) selon l'une des revendications précédentes, dans laquelle lesdites extrémités opposées de chaque montant (336) sont adaptées à glisser sur lesdites première et deuxième surfaces de came (301, 302) lorsque la bague de verrouillage (330) pivote autour de l'axe longitudinal (X) de la colonne (100).

8. Colonne (100) selon l'une des revendications précédentes, dans laquelle il est prévu, en vis-à-vis, sur les première et deuxième surfaces de came (301, 302), des plots (319, 329) en relief adaptés à coopérer avec ladite bague de verrouillage (330) pour limiter sa course angulaire.

9. Colonne (100) selon l'une des revendications précédentes, dans laquelle le dispositif de mise en appui (300) comprend en outre un ressort de compression (190) destiné à être interposé entre l'extrémité libre de la perche (170) télescopique et l'une des parois contre laquelle la colonne (100) est mise en appui.

## Patentansprüche

1. Säule (100) als Halterung für mindestens ein Elektrogerät und/oder den Kanal für Kabel oder Leiter für den Transport von Energie, die sich entlang einer Längsachse (X) erstreckt und ein längliches Gerüst (110), das wenigstens einen Kanal begrenzt, und eine Vorrichtung (300) zum Einklemmen des Gerüsts (110) zwischen zwei Wandungen aufweist, die eine Teleskopstange (170) aufweist, wobei die Vorrichtung (300) zum Einklemmen eine mit dem Gerüst (110) fest verbundene erste Nockenfläche (301) und eine zur Stange (170) gehörende zweite Nockenfläche (302) aufweist, wobei die erste und die zweite Nockenfläche ringförmig sind,
**dadurch gekennzeichnet, daß** die Teleskopstange (170) teilweise im Gerüst (110) angeordnet ist und sich ein Teil davon in Verlängerung des Gerüsts (110) erstreckt, und die Vorrichtung (300) zum Einklemmen einen Verriegelungsring (330) aufweist, der auf einer Innenseite zwei zur Längsachse (X) der Säule (100) parallele Nasen (336) aufweist, deren gegenüberliegende Enden dazu ausgelegt sind, gegen die erste (301) und zweite (302) Nockenfläche zu drücken, um die Stange (170) bei der Drehung des Verriegelungsrings (330) um die Längsachse (X) der Säule (100) gegenüber dem Gerüst (110) zu bewegen.

2. Säule (100) gemäß Anspruch 1, bei der die erste Nockenfläche (301) zu einem ersten Ring (310) gehört, der mit einem Deckel (311) fest verbunden ist, der das Ende des Gerüsts (110) abschließt, durch das die Stange (170) hervorragt.

3. Säule (100) gemäß einem der Ansprüche 1 und 2, bei der die zweite Nockenfläche (302) zu einem an der Stange (170) befestigten zweiten Ring (320) gehört.

4. Säule (100) gemäß einem der Ansprüche 1 bis 3, bei der die erste Nockenfläche (301) zwei Hälften eines sich um die Längsachse (X) windenden ersten Gewindegangs bildet.

5. Säule (100) gemäß einem der Ansprüche 1 bis 4, bei der die zweite Nockenfläche (302) zwei Hälften eines sich um die Längsachse (X) windenden zweiten Gewindegangs bildet.

6. Säule (100) gemäß den Ansprüchen 4 und 5, bei der sich der erste und der zweite Gewindegang von einer selben Winkelposition aus in entgegengesetzten Richtungen um die Längsachse (X) der Säule (100) erstrecken.

7. Säule (100) gemäß einem der vorangehenden Ansprüche, bei der die gegenüberliegenden Enden jeder Nase (336) dazu ausgelegt sind, auf der ersten und der zweiten Nockenfläche (301, 302) zu gleiten, wenn der Verriegelungsring (330) um die Längsachse (X) der Säule (100) schwenkt.

8. Säule (100) gemäß einem der vorangehenden Ansprüche, bei der auf der ersten und der zweiten Nockenfläche (301, 302) einander gegenüberliegende Erhebungen (319, 329) vorgesehen sind, die dazu ausgelegt sind, mit dem Verriegelungsring (330) zusammenzuwirken, um dessen Winkelbewegung zu begrenzen.

9. Säule (100) gemäß einem der vorangehenden Ansprüche, bei der die Vorrichtung (300) zum Einklemmen außerdem eine Druckfeder (190) aufweist, die dazu bestimmt ist, zwischen dem freien Ende der Teleskopstange (170) und einer der Wandungen, zwischen denen die Säule (100) eingeklemmt ist, zu liegen.

## Claims

1. A column (100) for supporting electrical accessories and/or for routing power conductors or cables, the column extending along a longitudinal axis (X) and including an elongate frame (110) defining at least one conduit, and a presser device (300) for pressing the frame (110) between two walls, the presser device comprising a telescopic pole (170);
said presser device (300) includes a first cam surface (301) that is secured to said frame (110), a second cam surface (302) that is associated with said pole (170), said first and second cam surfaces being annular, **characterized in that** the telescopic pole (170) is housed, at least in part, in said frame (110), with a portion that projects in line with said frame (110), and said presser device (300) includes a locking ring (330) with an inside face carrying two splines (336) that are parallel to the longitudinal axis (X) of the column (100) with opposite ends that are adapted to press against the first and second cam surfaces (301, 302) respectively, so as to move the pole (170) relative to the frame (110) when said locking ring (330) is turned about the longitudinal axis (X) of the column (100).

2. A column (100) according to claim 1, wherein said first cam surface (301) forms part of a first collar (310) that is secured to a cap (311) that covers the end of the frame (110) through which the pole (170) projects.

3. A column (100) according to claim 1 or claim 2, wherein said second cam surface (302) forms part of a second collar (320) that is mounted on said pole (170).

4. A column (100) according to any one of claims 1 to 3, wherein said first cam surface (301) forms two half turns of a first helix that winds around said longitudinal axis (X).

5. A column (100) according to any one of claims 1 to 4, wherein said second cam surface (302) forms two half turns of a second helix that winds around said longitudinal axis (X).

6. A column (100) according to claim 4 and claim 5, wherein said first and second helixes wind in opposite directions, starting from the same angular position around the longitudinal axis (X) of the column (100).

7. A column (100) according to any preceding claim, wherein said opposite ends of each spline (336) are adapted to slide over said first and second cam surfaces (301, 302) when the locking ring (330) pivots about the longitudinal axis (X) of the column (100).

8. A column (100) according to any preceding claim, wherein facing lugs (319, 329) are provided projecting from the first and second cam surfaces (301, 302), which lugs are adapted to co-operate with said locking ring (330) so as to limit its angular stroke.

9. A column (100) according to any preceding claim, wherein the presser device (300) further includes a compression spring (190) for interposing between the free end of the telescopic pole (170) and one of the walls against which the column (100) presses.
